Europäisches Patentamt

(19) European Patent Office

Office européen des brevets

(11) Publication number: **0 048 522**
**B1**

(12) # EUROPEAN PATENT SPECIFICATION

(45) Date of publication of patent specification: **01.08.84**

(21) Application number: **81201044.5**

(22) Date of filing: **18.09.81**

(51) Int. Cl.³: **F 16 L 59/10,** F 16 L 59/14
//B29C27/16, B29C27/24,
B29C27/28, B29D23/00

(54) A plastics pipe part provided with an outer foam plastics insulating layer.

(30) Priority: **19.09.80 NL 8005255**

(43) Date of publication of application:
**31.03.82 Bulletin 82/13**

(45) Publication of the grant of the patent:
**01.08.84 Bulletin 84/31**

(84) Designated Contracting States:
**AT BE CH DE FR GB IT LI LU NL SE**

(56) References cited:
**EP - A - 0 018 048
FR - A - 2 287 641
FR - A - 2 313 198
FR - A - 2 334 042
GB - A - 1 081 926
GB - A - 1 330 861
NL - A - 8 001 541**

(73) Proprietor: **WAVIN B.V.
Händellaan 251
NL-8031 EM Zwolle (NL)**

(72) Inventor: **Schuldink, Gerrit
36 Coevorderweg
Ommen (NL)**

(74) Representative: **van der Veken, Johannes Adriaan**
et al,
**EXTERPATENT Willem Witsenplein 4
NL-2596 BK 's-Gravenhage (NL)**

## Description

The invention relates to a flexible plastics pipe part provided with an outer crosslinked thermoplastics foam insulating layer the outer side of the foam being surrounded by a tubular casing.

A flexible plastics pipe part of this type is known from GB—A—1.522.236 (corresponding with FR—A—2.334.042). In this known pipe part the outer crosslinked polyethylene foam insulating layer has a density comprised between 150 and 250 kg/m³ and a crosslinking comprised between 0.05 and 0.06 W/mk.

This pipe presents the disadvantage of being insufficiently flexible due to the insufficient flexibility of the polyethylene foam. This insufficient flexibility makes it also impossible to surround the flexible plastics pipe part exactly with the foam layer by winding a foam layer strip around the flexible pipe part, as in that case the flexible pipe part would not be optimally centered with respect to the foam plastics layer and the tubular casing surrounding the foam plastic and therefore the insulating properties of the finished composite pipe would be different over the length of the pipe.

This holds the more as foam plastics of this type are not easily heat weldable to that it would be impossible to connect opposite edges of the strips in a very even and reliable way to each other by heat welding.

On the other hand surrounding the flexible pipe part by a strip of foam plastic material allows a simple method of obtaining insulated flexible pipe parts.

It is now the aim of the invention to provide a flexible plastics pipe part comprising a layer of plastics foam insulating material wound as a strip around said flexible pipe part and the opposite lateral edges of the strip being reliably heat sealed to each other.

This object is attained according to the invention in that the insulating layer composes a band of a crosslinked thermoplastics foam having a reticulating degree comprised between 10% and 70% and a volume density of 35 to 100 kg/m³, which band has been wound around the pipe part, the lateral edges of the band being welded together.

The abovementioned measures provide the following advantages:

a) A reticulating degree below 10% presents the disadvantage of a too low temperature resistance, thus allowing a flexible plastics pipe part to convey only heating fluids of restricted temperatures. As flexible plastics pipe parts according to the invention type are specially used for conveying heating fluids for heating houses and edifices, the latter fact is very disadvantageous.

b) Above the upper limit of 70% of the reticulating degree joining edge portion of the cross-linked thermoplastics foam by heat welding will become impossible,

c) Crosslinked foam plastics having a volume weight of less than 35 kg/m³ are insufficiently rigid to optimally center a flexible piper part with respect to the applied foam plastics layer and the tubular casing surrounding said foam plastic layer.

d) A foam plastics having a weight by volume of more than 100 kg/m³ is on the other hand too rigid so that the foam plastic is insufficiently flexible in order to surround the plastics centre pipe part completely with the foam plastics layer.

The reticulated thermoplastics foam appropriately consists of a reticulated polyolefin foam and, more particularly, of a reticulated polyethylene foam.

Advantageously a reticulated thermoplastics foam is used having a reticulating degree comprised between 30% and 50% and a volume density ranging preferably from 60 to 80 kg/m³.

The aforementioned reticulating degree limits are important as an improved closed cellular structure is thereby imparted to the plastics foam, which closed cellular structure improves the required insulation.

Preferably a knitted tube of thermoplastics material is clamped around the foam plastics insulating layer.

Very advantageously the material of the knitted tube consists of a polyamide material, as this material will provide very good results.

When the aforementioned tubular auxiliary layer is used a polybutylene pipe comprising a foam plastics insulating layer and having not yet attained its form stabilized state, is passed into a flexible tubular casing of, for instance, polyethylene, more particularly a high-density polyethylene, whereupon the assembly can be reeled up after crystallization.

After transport of the pipe material in a reeled condition, the pipe material can be removed from the reel and installed in a normal manner while applying any desired bend.

The measure of winding the band of thermoplastics foam around the pipe part comprises helically winding the band around the pipe part, so that the edges of the windings contact each other and are then interconnected by welding thereby forming a helically extending weld. However, it also comprises winding a plastics foam band around the pipe part and welding together the edges of the band thereby forming one longitudinal weld, which latter possibility is particularly preferred.

The invention will be illustrated with reference to an embodiment thereof with the aid of the drawings, wherein:

Figure 1 is a perspective view of a pipe part according to the invention;

Figure 2 is a cross-section through a pipe part according to the invention;

Figure 3 is an installation for manufacturing a pipe part according to the present invention;

Figure 4 shows a part of the finished composite pipe with projecting stocking.

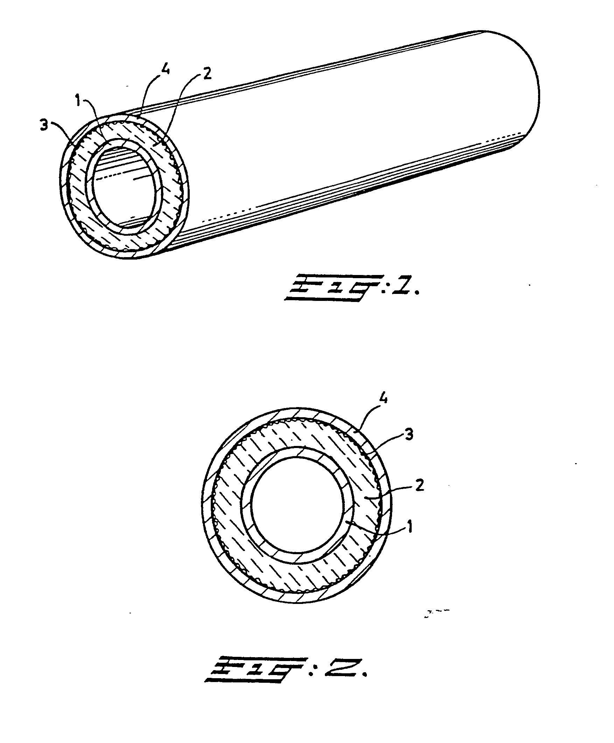

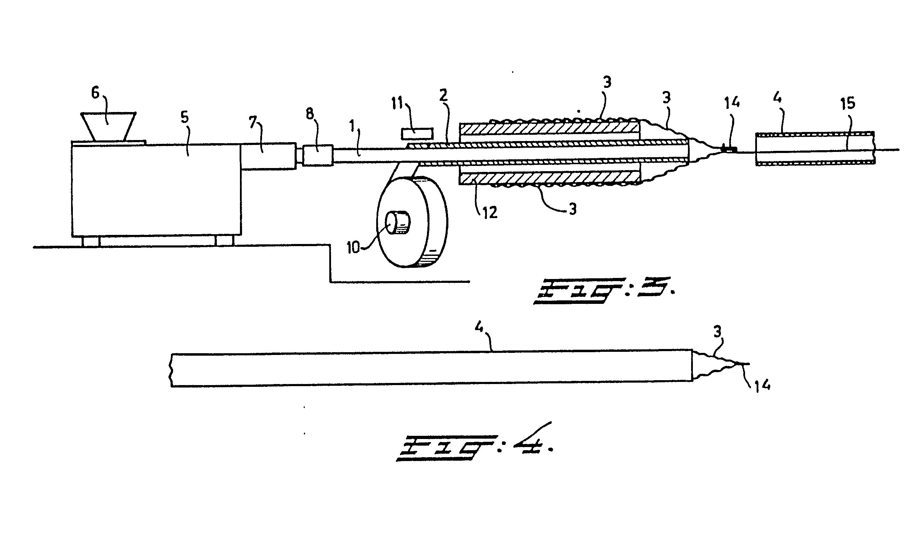

Figure 1 shows a polybutylene pipe part 1, which thermoplastics may be extruded in a normal manner as due to its properties, this material is very suitable for conveying heated liquids. Polybutylene is a strongly post-crystallizing plastic, thus causing such a polybutylene pipe to be extra sensitive to damages immediately after its extrusion.

A plastics foam insulating layer consisting of a reticulated polyethylene foam band 2 is wound upon the polybutylene pipe, the lateral edges of the band being welded to each other so that the polybutylene pipe is entirely surrounded.

The reticulated polyethylene foam band can be wound helically around the polybutylene pipe, the windings being interconnected by means of welding.

The applied reticulated polyethylene foam layer consists of a polyethylene having a reticulating degree comprised between 10 and 70%, and preferably a reticulating degree comprised between 30 and 50%. Particularly advantageous is a reticulating degree of approximately 39%.

The applied reticulated polyethylene foam, has a volume density ranging from 35 to 100 kg/m³, more preferably, ranging from 60 to 80 kg/m³, while more particularly a polyethylene foam is used having a reticulating degree of approximately 39% and a volume density of about 70 kg/m³.

By using a reticulating degree which is not higher than the abovementioned values, the edges of the foam plastics may be interconnected by welding, which provides a particularly good insulation, as outside moisture will never be able to penetrate into the polybutylene pipe, which might happen, if the edges of the plastics foam band are not welded to each other.

The outer side of the foam plastics insulating layer is provided with a knitted sleeve 3 of a nylon material, the assembly being surrounded by a tubular casing 4 of polyethylene.

Said tubular casing 4 may obviously also consist of other plastics, provided the tubular casing, the plastics foam insulating layer 2 and the pipe part 1 remain flexible, so that the finished pipe part material may be installed in nearly any desired bend, the flexible plastics pipe part additionally being kept properly centered with respect to the tubular casing and the surrounding foam plastics layer of reticulated polyethylene.

As after extrusion polybutylene pipes are extremely unstable, due to the rubber-like structure, it is recommended to manufacture the aforementioned pipe in a very particular manner.

This proceeds as follows: through an inlet 6 an extruder 5 is fed which extrudes a polybutylene pipe 1 through an extrusion nozzle 7. Subsequently said polybutylene pipe 1 is guided through a sizing device 8, a cooling device, and a drawing device in order to obtain the desired round shape and dimensions.

The polybutylene pipe 1 obtained after the sizing operation still has a rubber-like structure and has as yet to attain its form stability by crystallization.

In order to prevent a damage of a polybutylene pipe of this type which is still apt to be easily damaged or deformed, a reticulated polyethylene foam band 2 from a storage reel 10 is immediately wound around said polybutylene pipe 1, a welding element 11 connecting the contacting edges of the reticulated polyethylene foam band 2, by welding.

The still structurally instable pipe part comprising the foam plastics insulating layer is subsequently passed through a tubular chamber 12 having on its outer side a knitted nylon stocking 3.

End 14 of the knitted nylon stocking 3 is firmly knotted whereupon the supplied polybutylene pipe 1 having on its outer side the previously applied plastics foam plastics insulating layer 2, entrains the knitted nylon stocking 3 which said stocking has been positioned upon the outer side of the chamber 12. The nylon stocking 3 is subsequently tightly drawn around the insulating layer.

Finally the assembly consisting of the polybutylene pipe 1, the plastics foam insulating layer of reticulated polyethylene 2 and the knitted nylon stocking 3 surrounding the latter, is guided into a tubular casing 4 of polyethylene material, more particularly a high-density polyethylene material.

After a certain length of said tubular casing 4 of polyethylene, for example a length of 200 m, has been filled with a composite pipe consisting of a polybutylene pipe 1, a polyethylene plastics foam insulating layer 2 and a nylon stocking 3, the knotted end 14 of the nylon stocking 3 is cut off and the pipe is stored, so as to enable the polybutylene to post-crystallize in a normal manner and to attain its form stability, in order to be installed.

Hereupon the composite pipe is reeled up.

The use of a knitted nylon stocking 3 presents the advantage that parts of the foam plastics insulating layer 2 which may be insufficiently welded to each other, are properly retained, so that no problems will occur when the polybutylene pipe 1 with the plastics foam insulating layer 2 is passed through the tubular casing 4.

Said improperly welded parts of the plastics foam insulating layer 2 could easily be damaged by the front edge of the tubular casing 4 in the absence of a knitted nylon stocking 3.

The presence of the tightly knotted end 14 of the nylon stocking 3 will obviously allow a tensional force to be exerted upon the assembly by the drawing member 15, so that the composite pipe part may easily be passed through the tubular casing 4 thus affording, together with other features, to maintain a high productive capacity. Exerting a tensional force upon the end 14 may also easily overcome the shearing forces between the polybutylene pipe with the plastics foam insulating layer and the inner side of the tubular casing 4.

After post-crystallization of the polybutylene pipe 1, the finished composite pipe part will comprise a polybutylene pipe 1 being disposed tensionless in the insulating layer of plastics foam, consisting of a reticulated polyethylene having a reticulating degree comprised between the aforementioned limits.

It should be noted that the insulating layer will not. be compressed in the finished composite pipe part in accordance with the invention. If, as a matter of fact, the insulating layer with the polybutylene pipe would be reeled up directly, said polybutylene pipe will crystallize into a non-straight shape, so that subsequently bending said non-straight shape would cause the insulating layer to locally be compressed.

## Claims

1. A flexible plastics pipe part (1) provided with an outer thermoplastics foam insulating layer (2) the outer side of the foam being surrounded by a tubular casing (4) characterized in that the insulating layer (2) composes a band of a crosslinked thermoplastics foams having a reticulating degree comprised between 10% and 70%, and a volume density of 35 to 100 kg/m³, which band has been wound around the pipe, the lateral edges of the band being welded together.

2. A plastics pipe part according to claim 1, characterized in that the plastics foam consists of a cross-linked polyolefin foam.

3. A plastics pipe part according to claim 1, characterized in that the plastics foam consists of a crosslinked polyethylene.

4. A plastics pipe part according to claims 1 to 3, characterized in that the plastics foam is a crosslinked polyethylene foam, having a reticulating degree of 39%.

5. A plastics pipe part according to any one or more of the preceding claims, characterized in that the cross linked thermoplastics foam and more particularly, a polyethylene foam, has a volume density from 60 to 80 kg/m³.

6. A plastics pipe part according to any one or more of the preceding claims, characterized in that the flexible plastics pipe part (1) consists of a high-temperature resistant and strongly post-crystallizing plastic, preferably a polybutylene.

## Patentansprüche

1. Flexibles Kunststoffrohrteil (1) mit einer äußeren Isolierschicht (2) aus thermoplastischem Schaumstoff, wobei die Außenseite des Schaumstoffs von einem rohrförmigen Mantel (4) umgeben ist, dadurch gekennzeichnet, daß die Isolierschicht (2) aus einem Band eines vernetzten thermoplastischen Schaumstoffs besteht, der einen Vernetzungsgrad von 10 bis 70% und eine Raumdichte von 35 bis 100 kg/m³ aufweist, und das Band um das Rohr gewickelt ist, wobei seine Seitenränder miteinander verschweißt sind.

2. Kunststoffrohrteil nach Anspruch 1, dadurch gekennzeichnet, daß der Schaumstoff aus einem vernetzten Polyolefinschaum besteht.

3. Kunststoffrohrteil nach Anspruch 1, dadurch gekennzeichnet, daß der Schaumstoff aus einem vernetzten Polyäthylen besteht.

4. Kunststoffrohrteil nach den Ansprüchen 1 bis 3, dadurch gekennzeichnet, daß der Schaumstoff ein vernetzter Polyäthylenschaum mit einem Vernetzungsgrad von 39% ist.

5. Kunststoffrohrteil nach einem oder mehreren der vorhergehenden Ansprüche, dadurch gekennzeichnet, daß der vernetzte thermo-plastische Schaumstoff, insbesondere ein Poly-äthylenschaum, eine Raumdichte von 60 bis 80 kg/m³ aufweist.

6. Kunststoffrohrteil nach einem oder mehreren der vorhergehenden Ansprüche, dadurch gekennzeichnet, daß das flexible Kunststoffrohrteil (1) aus einem hochtemperaturbeständigen und stark nachkristallisierenden Kunststoff, vorzugsweise einem Polybutylen, besteht.

## Revendications

1. Elément de tuyau en matière plastique souple (1) comprenant une couche isolante extérieure en mousse thermoplastique (2), le côté extérieur de la mousse étant entouré d'une gaine tubulaire (4), caractérisé en ce que la couche isolante (2) se compose d'une bande de mousse thermoplastique réticulée d'un degré de réticulation compris entre 10% et 70% et d'une densité en volume de 35 à 100 kg/m³, bande qui est enroulée autour du tuyau les bords latéraux de la bande étant soudés ensemble.

2. Elément de tuyau en matière plastique selon la revendication 1, caractérisé en ce que la mousse de matière plastique se compose d'une mousse de polyoléfine réticulé.

3. Elément de tuyau en matière plastique selon la revendication 1, caractérisé en ce que la mousse de matière plastique se compose d'un polyéthylène réticulé.

4. Elément de tuyau en matière plastique selon les revendications 1 à 3, caractérisé en ce que la mousse de matière plastique est une mousse de polyéthylène réticulé, d'un degré de réticulation de 39%.

5. Elément de tuyau en matière plastique selon l'une quelconque des revendications précédentes, caractérisé en ce que la mousse thermoplastique réticulée, et plus particulièrement une mousse de polyéthylène, présente une densité en volume de 60 à 80 kg/m³.

6. Elément de tuyau en matière plastique selon l'une quelconque des revendications précédentes, caractérisé en ce que l'élément de tuyau en matière plastique souple (1) se compose d'une matière plastique résistant à hautes températures et fortement post-cristallisante, de préférénce un polybutylène.

FIG. 1.

FIG. 2.

FIG. 3.

FIG. 4.